Europäisches Patentamt

European Patent Office

Office européen des brevets

(11) Publication number: **0 205 867**
**A1**

## EUROPEAN PATENT APPLICATION

(21) Application number: **86106392.3**

(22) Date of filing: **12.05.86**

(51) Int. Cl.4: **B60B 3/04** , **B21D 53/30**

(30) Priority: **13.06.85 IT 2113285**

(43) Date of publication of application:
**30.12.86 Bulletin 86/52**

(84) Designated Contracting States:
**DE FR GB SE**

(71) Applicant: **ALUMINIA S.p.A.**
**Piazza Marconi, 25**
**I-00144 Roma-Eur(IT)**

(72) Inventor: **Morri, Domenico**
**c/o Aluminia S.p.A. Isml Via Fauser, 4**
**I-28100 Novara NO(IT)**
Inventor: **Uccheddu, Stefano**
**c/o Aluminia S.p.A. Isml Via Fauser, 4**
**I-28100 Novara NO(IT)**

(74) Representative: **Trupiano, Roberto et al**
**BREVETTI EUROPA S.r.l. Piazza Bernini, 6**
**I-20133 Milano(IT)**

(54) **Light-alloy wheel with differentiated thickness and process to obtain it.**

(57) Light-alloy wheel for vehicles, in particular of aluminium alloy, having thickness and strength differentiated as a function of the stresses said wheel undergoes under operating conditions, provided with characteristics of particular lightness, and manufactured by a lathe-spinning process.

Fig.1

EP 0 205 867 A1

## "LIGHT-ALLOY WHEEL WITH DIFFERENTIATED THICKNESS AND PROCESS TO OBTAIN IT"

The objects of the present invention are a lightalloy wheel having a profile with differentiated thickness, provided with characteristics of particular lightness, and the process to obtain it.

Light-alloy wheels for vehicles, in particular made of aluminium alloy, manufactured either by permanent mould casting or by die-casting, are already known and widely used. Such wheels show the drawback of having a not-perfectly homogeneous structure, because of irregular solidifications, segregations of crystals and the like, and of requiring hence, in order to obtain the required mechanical characteristics, considerable thicknesses of the manufacture, with the use of considerable material amounts and consequent high weight and cost of the same wheel.

Also wheels are known, which are obtained by assembling, by means of bolting, welding, bonding and the like, two or more pieces of suitable shape, obtained by starting from metal sheets and/or section bars extruded and shaped by the so-called "roll forming" process, or by cold pressing. These wheels result generally more strong and light that those obtained by casting, but suffer from the drawback that each of said pieces is dimensioned, in thickness, and hence in weight, substantially along its whole profile, to the maximum thickness as determined in its point of highest stress, with consequent heavy waste of material, and considerable increase of the wheel weight.

Purpose of the present invention is to provide a light-alloy wheel for vehicles, in particular a wheel of aluminium alloy, able to overcome the drawbacks shown by the similar wheels used up to date, and to show in the overall a high strength and stiffness against strains and stresses, combined to high-lightness characteristics.

Another purpose of the invention is to provide a wheel constituted by components or elements of different shape, in particular made of aluminium alloy, all said elements being obtained by means of analogous forming processes, so as to considerably simplify the working cycle.

A further purpose of the present invention is to provide a wheel with the minimum amount of material, with the mechanical characteristics remaining the same, with evident advantages as for the performance and the fuel consumption of the vehicle on which said wheel is installed.

These and still further purposes, which shall be more clearly evidenced by the following disclosure, are achieved by a light-alloy wheel, in particular made of aluminium alloy, which wheel is constituted, according to the present invention, by components assembled with each other by welding, bolting, bonding and the like, each of them having a defined profile with thicknessdifferentiated as a function of the stresses the said components undergo, said definition of the profile and said thickness differentiation of the individual components being previously determined by mathematical modeling and computation analysis by interactive graphic system and being then practically embodied by shaping, according to the defined profile, by means of a lathe-spinning process, elements of aluminium alloy obtained from rolled or pressed sheets and/or from extruded tubular section profiles.

More particularly, the wheel according to the present invention is constituted by a first element obtained from a disc of metal sheet and shaped by lathe-spinning so as to form as one sigle piece the "wheel centre" and the related "inner half-race", the thickness of said element being maximum in correspondence of the bores provided for the fastening of the wheel centre onto the hub, decreasing to 70 ÷ 85% of said maximum thickness in the nearby of the brake cooling windows, on their side towards the wheel centre, and to 55 ÷ 75% in the nearby of said windows,on their side towards the inner half-race, to assume then a value ranging from 40 to 60% in correspondence of said inner half-race, to said first element a second element being associated by welding, bondingand the like, said second element being obtained from a metal sheet disc or from a tubular section bar extruded and shaped, always by spinning, so as to form the "outer half-race", the thickness of said element being substantially equal and corresponding to that of the inner half-race shaped on the first element.

It is known that a wheel under operating conditions, i.e., a wheel installed on a running vehicle, is mainly stressed by the following forces:

a) forces due to the tire inflating pressure;

b) vertical forces due to the vehicle own weight;

c) transversal forces generated by the centrifugal force when travelling along a curve;

d) longitudinal forces generated during the accelerating and braking steps.

The components of these forces relating to the tire/ground contact are converted into distributed actions, acting in correspondence of the tire/tire-rim. The whole of these contact actions and their distribution constitutes the system of forces directly stressing the wheel.

Starting from this system of forces, and using, e.g., a suitable interactive graphic system which allows analysing, displaying it, the wheel behaviour under load, the minimum thicknesses necessary in the various points of the same wheel are defined, according to the present invention, as a function of the stresses under operating conditions.

The working process by lathe-spinning, in particular by using types of spinning lathes programmed and under numerical control, allows the desired thicknesses to be obtained with high precision, and without any limitations as for the minimum attainable thickness, also when starting from high-thickness metal sheets, easily reducing said thickness being possible, to an extent even higher than 50% of the initial thickness of the metal sheet and/or of the extruded tubular section profile.

Said wheel can be accomplished by advantageously using aluminium alloys of Al-Mg type belonging to the series AA 5000, the so-called "work-hardening" alloys, or Al-Si-Mg alloys belonging to the series AA 6000, Al-Zn alloys belonging to the series AA 7000,and Al-Cu alloys belonging to the series AA 2000, the so called "heattreatment" alloys, and starting, as already said, from discs or rolled or pressed metal sheets and from extruded tubular profiles.

The invention, as regards a preferred, but not exclusive form of practical embodiment thereof, is disclosed in the following in greater detail, with reference to the attached drawing tables, given to purely indicative and not limitative purposes, in which:

Fig. 1 is a diametrical sectional view of an example of wheel for motor vehicles manufactured according to the invention;

Fig. 2 is a diametrical sectional view of the same wheel as of Fig.1, with the numerical indication of the values of the stresses acting in the various points under operating conditions, expressed as Newtons/mm²;

Figs. 3, 4 and 5 show sequential views of an example of the procedure for the analysis of the deformations under operating conditions, carried out by the interactive graphic system used;

Fig. 6 is a schematic view of the sequence of the lathe-spinning steps to accomplish the first element of the wheel of Fig. 1;

Fig. 7 is a schematic view of the accomplishment of the second element of the wheel of Fig. 1 by starting from a metal sheet, and

Fig. 8 shows the accomplishment of the second ele ment of the same wheel by starting, as analternative procedure, from a tubular section profile.

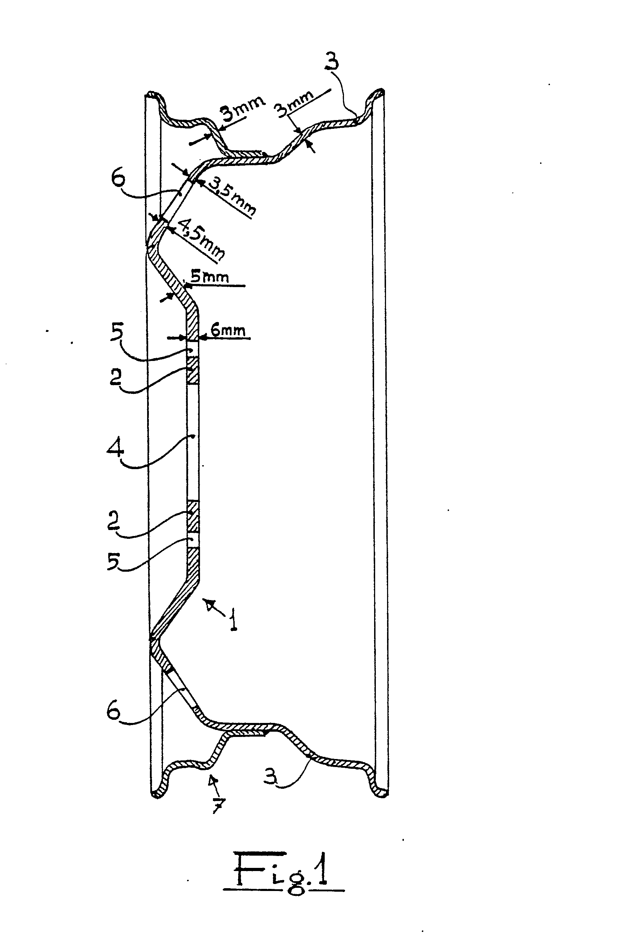

In Fig. 1 an example is shown of wheel according to the present invention, having a diameter of 13 inches (330.2 mm) and a width of 4 inches - (101.6 mm), designed to bear a load on the axle of 550 kg, and made from aluminium alloy AA 5154, containing about 3.5% of Mg. Referring to such figure, the first element or component of the wheel 1 constitutes the wheel centre 2 and the inner half-race 3. On said first element the bore for the hub 4, the bores for the fastening bolts 5 and the windows for the brake cooling 6 are provided. To said first element the second element 7, constituting the outer half-race, is associated. As it can be seen from such a 1figure, the thickness of the wheel in the nearby of the holes 5 is of 6 mm, decreases to 5 mm and then to 4.5 mm in the nearby of the windows 6 towards the wheel centre, furthermore decreasing to 3.5 mm and then to 3 mm in correspondence of the inner half-race. The thickness of the outer half-race 7 is of 3 mm, i.e., correspondingly equal to the thickness of the inner half-race.

The overall weight of the wheel of Fig. 1, according to the present invention, results to be of 2.4 kg in total, i.e., lower by at least 30% than the weight of traditional light-alloy wheels having the same characteristics.

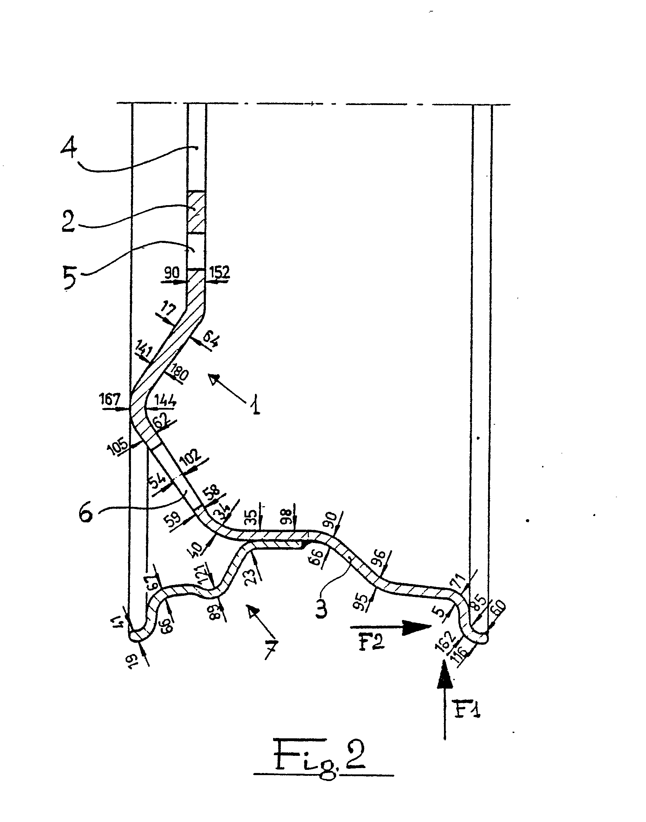

In fig. 2 the same wheel of Fig. 1 is shown with the indication of the calculated values of the tensions, in N/mm² (Newtons per mm²) on the inner and outer surfaces of the wheel, under limit conditions of travelling along a curve with vertical load $F_1$ of 5395 N (550 kg) and transversal load $F_2$ of 3776 N (385kg), with the tire pressure being of 0.3 N/mm² (3 kg/cm²).

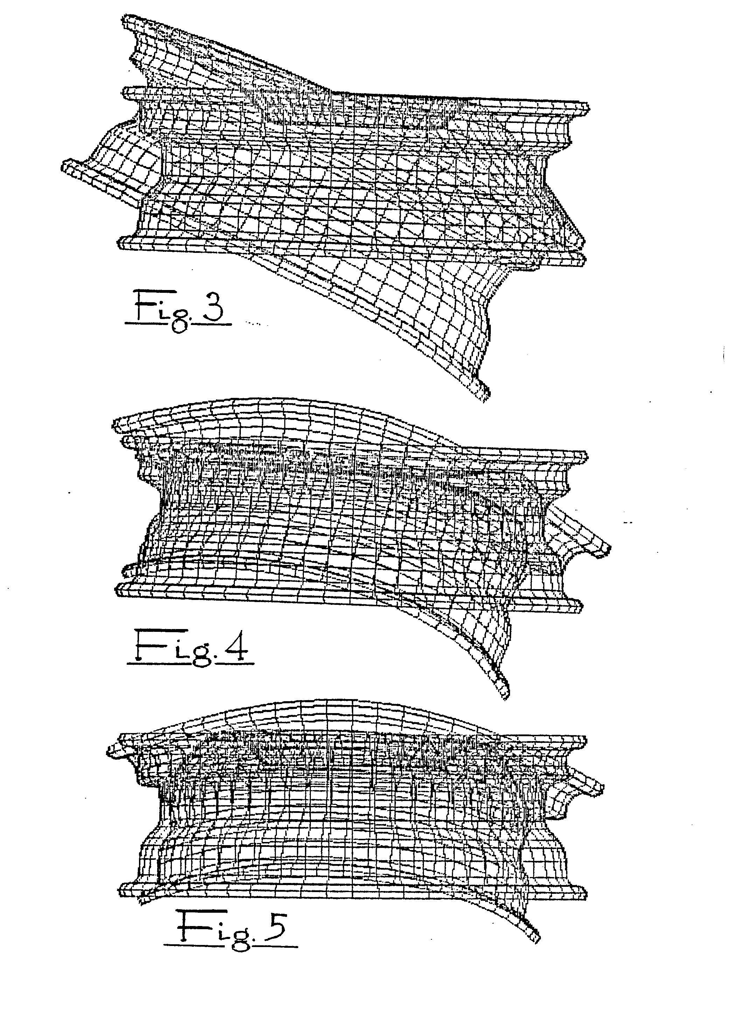

In Figs. 3, 4 and 5 to exemplifying purposesthe sequential steps of the process for the accomplishment of the wheel in order to arrive to the end shape are shown, taking as reference the deformations occuring under operating conditions when travelling along a curve.

Fig. 5 refers in particular to the wheel having the shape and thicknesses according to the invention, according to what reported in Figs. 1 and 2; Figs. 3 and 4 relate to wheels manufactured from the same material under the same loading conditions, but with different distributions of the thicknesses.

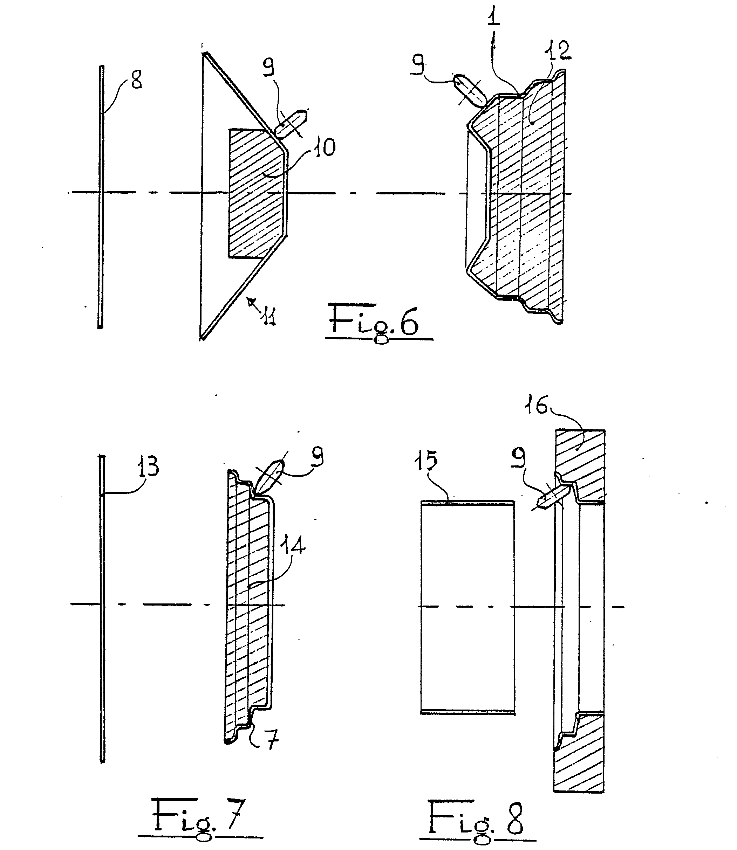

In Fig. 6 the disc of rolled sheet 8 is shaped by the action of the tool, schematically indicated with 9, against the die 10 fastened to the chuck of a spinning lathe, up to assume the shape of cone frustum 11. Said cone frustum is then machined on its inner side against a second die 12, up to assume the shape of the first element of the wheel 1. On said first element the bores for the hub, the windows and the bores for the fastening bolts are then provided, according to known processes, not shown.

In Fig. 7 the process is schematically shown to obtain the second element of the wheel according to the invention, and namely the outer half-race, starting from the metal sheet 13, spun by the tool 9 against the die 14, whilst in Fig. 8 the process to obtain the same second element starting on the contrary from an extruded tubular section profile 15 spun against the die 16 is shown.

As it appears evident, in order to obtain the wheel according to the invention, only three dies, and namely two dies to produce the element 1 - (dies of types 10 and 12), and one to produce the element 2 (die of type 14 or, as an alternative, of type 16), are necessary, with considerable simplifying of the process and with evident financial and practical advantages. The wheel of Fig. 1 can be further finished by submitting the disc to one or more pressing operation(s) to the purpose of providing, if necessary, ribs or projections, e.g., in correspondence of the fastening zone. Moreover, the assembled wheel, or the two elements separately, can be submitted to surface treatments such as painting, anodizing, chemical or mechanical silking, to the purpose of improving the aesthetical appearance of the wheel and protecting it, e.g., from the atmospheric agents or from the salts which are spread on the roads against ice during the winter season.

Obviously, to the invention as hereinabove disclosed according to a preferred form of practical embodiment, structurally and functionally equivalent changes and variants can be provided, without going out of the protecting scope of the same invention.

## Claims

1. Light-alloy wheel characterized in that it is constituted by components assembled with each other by welding, bolting, bonding and the like, each of them having a defined profile with thickness differentiated as a function of the stresses the said components undergo, said definition of the profile and said thickness differentiation of the individual components being previously determined by mathematical modeling and computation analysis by interactive graphic system and being then practically accomplished by forming, according to the defined profile, by means of a lathe-spinning process, elements of aluminium alloy obtained from rolled or pressed sheets and/or from extruded tubular section profiles.

2. Light-alloy wheel, according to claim 1, characterized in that it is constituted by a first element obtained from a disc of metal sheet and shaped by lathe-spinning so as to form as one sigle piece the "wheel centre" and the related "inner half-race", the thickness of said element being maximum in correspondence of the bores for the fastening of the wheel centre onto the hub, decreasing to 70 $\div$ 85% of said maximum thickness in the nearby of the brake cooling windows, on their side towards the wheel centre, and to 55 $\div$ 75% in the nearby of said windows, on their side towards the inner half-race, to assume then a value ranging from 40 to 60% in correspondence of said inner half-race, to said first element a second element being associated by welding, bonding or the like, said second element being obtained from a metal sheet disc or from a tubular section profile extruded and shaped, always by lathe-spinning, so as to form the "outer half-race", the thickness of said element being substantially equal and corresponding to that of the inner half-race shaped on the first element.

3. Light-alloy wheel according to claims 1 and 2, characterized in that said components or elements which constituted said wheel are manufactured by using material selected from the group constituted by aluminium alloys of Al-Mg type belonging to the series AA 5000, Al-Si-Mg alloys belonging to the series AA 6000, Al-Zn alloys belonging to the series AA 7000, and Al-Cu alloys belonging to the series AA 00.

4. Light-alloy wheel, according to the foregoing claims, characterized in that it is manufactured by using a spinning lathe of the type programmed and under numerical control.

5. Light-alloy wheel, according to the foregoing claims, characterized in that it is manufactured by a process of lathe-spinning, involving the use of only three dies of different shape.

Fig. 1

Fig.2

Fig. 3

Fig. 4

Fig. 5

_Fig.6_

_Fig.7_

_Fig.8_

| | **DOCUMENTS CONSIDERED TO BE RELEVANT** | | EP 86106392.3 |
|---|---|---|---|

| Category | Citation of document with indication, where appropriate, of relevant passages | Relevant to claim | CLASSIFICATION OF THE APPLICATION (Int. Cl.4) |
|---|---|---|---|
| A | EP - A2 - 0 054 931 (VEREINIGTE METALLWERKE RANSHOFEN-BERNDORF AG) <br> * Fig. 4; claims * <br> -- | 1,2 | B 60 B 3/04 <br> B 21 D 53/30 |
| A | EP - A2 - 0 093 893 (ALLUMINIO ITALIA S.P.A.) <br> * Claims * <br> -- | 1,3 | |
| A | DE - A1 - 2 824 972 (BBS-KRAFTFAHR- ZEUGTECHNIK GMBH & CO KG) <br> * Claims * <br> -- | 1,2 | |
| A | DE - A1 - 2 651 458 (BOHNER & KÖHLE GMBH & CO) <br> * Page 16, line 11 - page 17, line 5 * <br> ---- | 1 | |

| | | | TECHNICAL FIELDS SEARCHED (Int. Cl.4) |
|---|---|---|---|
| | | | B 60 B <br> B 21 D |

The present search report has been drawn up for all claims

| Place of search | Date of completion of the search | Examiner |
|---|---|---|
| VIENNA | 05-09-1986 | WIDHALM |

EPO Form 1503 03 82